# EUROPÄISCHE PATENTSCHRIFT

(11) **EP 1 999 964 B1**
(45) Veröffentlichungstag und Bekanntmachung des Hinweises auf die Patenterteilung: **30.08.2017**
(21) Anmeldenummer: 07726791.2
(22) Anmeldetag: 12.03.2007
(51) Int. Cl.: H04N 19/12, H04N 19/172, H04N 19/43, H04N 19/44, H04N 19/46, H04N 19/61, H04N 19/176

(54) **MULTI-STANDARD VIDEODEKODIERMITTEL FÜR MOBILFUNK**
MULTI-STANDARD VIDEO DECODING MEANS FOR THE MOBILE RADIO TELEPHONE SERVICE
MOYEN DE DECODAGE VIDEO MULTINORME POUR LA TELEPHONIE MOBILE

(30) Priorität: 17.03.2006 DE 102006012449
(43) Veröffentlichungstag der Anmeldung: 10.12.2008
(73) Patentinhaber: QUALCOMM Incorporated, San Diego, CA 92121-1714 (US)
(72) Erfinder: STOCKHAMMER, Thomas, Bergen 83346 (DE)
(74) Vertreter: Dunlop, Hugh Christopher
(86) Internationale Anmeldenummer: PCT/EP2007/052280
(87) Internationale Veröffentlichungsnummer: WO 2007/107472

(56) Entgegenhaltungen:
- WO-A-2004/114668
- ANONYMOUS: "Method for seamless transitions between video decoders" IP.COM JOURNAL, IP.COM INC., WEST HENRIETTA, NY, US, 6. August 2003 (2003-08-06), XP013012336 ISSN: 1533-0001
- T-M. LIU, T-A. LIN, S-Z. WANG, W-P. LEE, C-Y. LEE: "A 125?W Fully Scalable MPEG-2 and H.264/AVC Video Decoder for Mobile Applications" DIGEST OF TECHNICAL PAPERS OF THE IEEE INTERNATIONAL SOLID-STATE CIRCUITS CONFERENCE, ISSCC 2006, SESSION 22, LOW POWER MULTIMEDIA,, [Online] 5. Februar 2006 (2006-02-05), - 9. Februar 2006 (2006-02-09) Seiten 1-10, XP002446773 San Francisco, CA, USA Gefunden im Internet: URL:http://si2.ee.nctu.edu.tw/publication/ CONF/tmliu_isscc06.pdf> [gefunden am 2007-08-09]
- ANDREA BASSO: "Beyond 3G video mobile video telephony: The role of 3G-324M in mobile video services" MULTIMEDIA TOOLS AND APPLICATIONS, KLUWER ACADEMIC PUBLISHERS, BO, Bd. 28, Nr. 1, 1. Februar 2006 (2006-02-01), Seiten 173-185, XP019213905 ISSN: 1573-7721

## Beschreibung

Die Erfindung betrifft ein Verfahren zum Dekodieren eines Datenstroms, insbesondere eines Videodatenstroms sowie einen Empfänger für einen Videodatenstrom.

In modernen Kommunikationssystemen, beispielsweise UMTS/WCDMA (Universal Mobile Telekommunication System) oder auch WLAN (Wireless Local Area Network) existiert das Bedürfnis neben Einzelbilder auch bewegte Bilder in Form von Videodaten zwischen zwei Mobilfunkgeräten, so genannten Terminals zu übertragen. Hierfür existieren bereits bekannte Verfahren und Standards, beispielsweise der H.324 Standard für den Mobilfunkstandard WCDMA/UMTS.

Aufgrund der verschiedenen Anbieter von Telekommunikationsbeziehungsweise Mobilfunkgeräten in unterschiedlichen Preis- und Anwendungskategorien ist es möglich, dass nicht jedes Mobilfunkgerät die gleichen Enkodier- beziehungsweise Dekodierverfahren und somit die gleichen Übertragungsstandards für Videodaten verwenden kann. So existieren beispielsweise die Videoübertragungsstandards H.263 und H.264 für eine Videoübertragung bei mobilen Kommunikationsgeräten. Die beiden genannten Videoübertragungsstandards benutzen das so genannte "predictive coding", bei denen Informationen eines ersten Videobildes, eines so genannten Frames auch für die Decodierung eines nachfolgenden Videobildes verwendet werden. Mit anderen Worten werden bei den Videoübertragungsstandards zum Teil nur die Änderungen eines Bildes gegenüber einem vorangegangenen Bild kodiert. Dadurch kann eine sehr effiziente Kodierung erreicht werden.

Für eine Videoübertragung zwischen zwei mobilen Kommunikationsgeräten müssen diese sich nach einem Verbindungsaufbau auf ein gemeinsames Dekodier- und Enkodierverfahren einigen. Gleichzeitig ist es aber gewünscht, dass Benutzer von mobilen Kommunikationsgeräten möglichst frühzeitig und ohne Zeitverlust die gewünschte Videoübertragung beginnen können und den Gesprächspartner sehen. Ändert sich während einer bestehenden Videoübertragung ein Verbindungsparameter, beispielsweise die zur Verfügung stehende Bandbreite für die Übertragung, so kann es notwendig sein, auf einen anderen Videostandard umzuschalten. Ein solcher Umschaltvorgang soll möglichst ohne Unterbrechung der existierenden Videoübertragung erfolgen, so dass der Benutzer keine störenden Standbilder beziehungsweise Artefakte im Videobild wahrnimmt.

WO 2004/114668 A beschreibt einen Videodekoder zum Empfang eines komprimierten Datenstroms und zum Bereitstellen einer dekomprimierten Videoausgabe, wobei ein Demultiplexer zum Empfang eines komprimierten Datenstroms vorgesehen ist, wobei ein normaler Datenstrom und ein Kanalwechsel-Datenstrom voneinander getrennt werden.

"Method for seamless transitions between video decoders", IP.COM Journal, IP.COM Inc., West Henrietta, NY, US, 6. August 2003 beschreibt ein Verfahren für nahtlose Übergänge zwischen Videodekodern. Ein Empfänger verwendet zwei Dekoder um einen originalen Videodatenstrom und einen neu komprimierten Videodatenstrom zu dekodieren.

Aufgabe der Erfindung ist es, ein Verfahren vorzusehen, bei dem schnell zwischen verschiedenen Decodierverfahren für eine Datenstrom umgeschaltet werden kann. Ebenso ist es Aufgabe, einen Empfänger anzugeben, der einen unterbrechungsfreien Nutzdatenstrom auch bei einem Wechsel eines Datenstromformats ermöglicht.

Diese Aufgaben werden mit den Gegenständen der unabhängigen Patentansprüche gelöst. Vorteilhafte Ausgestaltungen und Weiterbildungen der Erfindung sind Gegenstand der Unteransprüche.

Bei der Erfindung wird vorgeschlagen, einen Decoder beziehungsweise ein Dekodiermittel bereitzustellen, der ausgestaltet ist, aus einem Datenstrom in einem ersten Format wenigstens zwei Blöcke von Nutzdaten zu dekodieren. Unter Block von Nutzdaten wird dabei eine bestimmte Anzahl von Nutzdaten verstanden, beispielsweise ein Bild. Dazu kann der Decoder Informationen des ersten Blocks der Nutzdaten zur Decodierung des wenigstens einen zweiten Blocks verwenden. Der Decoder verwendet ein "predictive Coding", indem er Teilinformationen von Blöcken bereits dekodierter Nutzdaten für die Decodierung folgender Blöcke an Nutzdaten verwendet. Für den Dekodiervorgang wird der Datenstrom im ersten Format dem Decoder zugeführt, der anschließend in mehreren Schritten die Nutzdaten erzeugt. Erfindungsgemäß ist nun vorgesehen, den Decoder vor dem Zuführen des Datenstroms mit Informationen eines Referenzdatenblocks zu initialisieren. Dieser Referenzdatenblock dient dazu, dass der Decoder sofort und ohne Zeitverzögerung mit der Decodierung des zugeführten Datenstroms beginnen kann. Insbesondere ist der Decoder dadurch in der Lage, dem Referenzdatenblock für die Decodierung der Blöcke von Nutzdaten zu verwenden. Dadurch kann ein erster Datenblock von Nutzdaten unter Verwendung der Information des Referenzdatenblocks dekodiert werden.

Das erfindungsgemäße Verfahren ist mit Vorteil besonders bei einem Wechsel zwischen zwei Dekodiermitteln für das Dekodieren von Datenströmen mit unterschiedlichen Datenformaten anwendbar. Beispielsweise kann die Information des Referenzdatenblocks aus einem Block von Nutzdaten eines zweiten Decoders abgeleitet sein, der ausgestaltet ist, aus einem zweiten Datenstrom wenigstens einen Block von Nutzdaten zu dekodieren. Wird nun beispielsweise das zweite Dekodiermittel abgeschaltet und auf das erste Dekodiermittel gewechselt, so lassen sich die Informationen eines vom zweiten Dekodiermittel dekodierten Nutzdatenblocks als Informationen des Referenzdatenblocks für das erste Dekodiermittel verwenden. Damit kann dieser Decoder mit Informationen initialisiert werden, die eine unterbrechungsfreie Decodierung auch bei einem Wechsel zwischen zwei Datenströmen unterschiedlichen Formats ermöglichen.

In einer Ausgestaltung umfasst das Verfahren somit weiterhin die Schritte eines Empfangens eins Datenstromes in einem zweiten Format und ein Dekodieren dieses Datenstromes in wenigstens einem Block von Nutzdaten. Anschließend wird dieser Block als Referenzdatenblock zwischengespeichert und das erste Dekodiermittel aktiviert und mit initialisiert.

In einer Ausgestaltung der Erfindung wird ein derartiger Wechsel angezeigt, indem beispielsweise ein Transportdatenstrom empfangen wird, welches den Datenstrom umfasst sowie ein Steuersignal enthält. Dieses zeigt den Wechsel des zweiten Dekodiermittels auf das erste Dekodiermittel an und beinhaltet gleichzeitig die Information des Referenzdatenblocks zum Initialisieren des ersten Dekodiermittels. Dabei kann das Steuersignal beispielsweise einen Verweis auf Informationen eines Blocks von Nutzdaten aus dem zweiten Dekodiermittel umfassen und dadurch den Referenzdatenblock selbst Referenzieren. Mit diesen Informationen wird dann das erste Dekodiermittel initialisiert, so dass es unterbrechungsfrei den ihm zugeführten Datenstrom dekodieren kann.

In einer weiteren Ausgestaltung wird der Datenstrom in dem zweiten Format erzeugt, in dem wenigstens ein Block von Eingangsnutzdaten mit einem ersten Enkodiermittel (E1) enkodiert und dem enkodierten Block des Steuersignals zugeordnet wird. Der Schritt des Erzeugens kann dabei die folgenden Schritte umfassen:
- Abspeichern des wenigstens eines Blocks von Nutzdaten als Nutzreferenzdatenblock;
- Deaktivieren des ersten Enkodiermittels;
- Aktivieren eines zweiten Enkodiermittels, das zur Erzeugung des Datenstroms in dem ersten Datenstromformat ausgeführt ist;
- Initialisieren des zweiten Enkodiermittels mit Informationen des Nutzreferenzdatenblocks.

Dadurch wird gewährleistet, dass sowohl auf der Senderseite, als auch auf der Empfangsseite im Wesentlichen synchron umgeschaltet wird, so dass die Datenströme nicht mit dem falschen Enkodier- beziehungsweise Dekodiermittel verarbeitet werden.

Das erste oder das zweite Datenstromformat kann unterschiedliche Datenformate aufweisen. Beispielsweise kann es ein Bildformat nach dem JPEG oder dem PNG-Standard haben. Ebenso kann es ein Format eines Videoübertragungsstandards sein, beispielsweise die Standards H.263, H.264 oder MPEG2.

In einem anderen Aspekt der Erfindung weist der Empfänger einen Eingang zur Zuführung eines Datenstroms in einem ersten oder zweiten Format auf. Der Empfänger umfasst ein erstes Dekodiermittel und ein zweites Dekodiermittel. Das erste Dekodiermittel ist ausgestaltet aus einem eingangsseitig zugeführten Datenstrom des ersten Datenstromformats wenigstens einen Block von Nutzdaten zu dekodieren. Dazu weist das erste Dekodiermittel einen Puffer auf. Das zweite Dekodiermittel ist ausgestaltet, aus dem Datenstrom im zweiten Format ebenfalls wenigstens einen Block von Nutzdaten zu extrahieren. Der Empfänger ist ausgeführt in Antwort auf eine Änderung des Formates im am Eingang zugeführten Datenstrom, von dem zweiten Dekodiermittel auf das erste Dekodiermittel zu wechseln. Ebenso ist der Puffer des ersten Dekodiermittels mit dem zweiten Dekodiermittel für eine Initialisierung mit einem Referenzdatenblock gekoppelt. Der Referenzdatenblock ist aus dem wenigstens einen Block von Nutzdaten abgeleitet, die vor dem zweiten Dekodiermittel erzeugbar ist.
Mit der erfindungsgemäßen Kopplung wird bei einem Umschalten erreicht, dass das erste Dekodiermittel mit einem Startwert initialisiert wird und so unterbrechungsfrei einen zugeführten Datenstrom dekodieren kann. Dies ist insbesondere dann von Vorteil, wenn wenigstens das erste Dekodiermittel ausgestaltet ist, ein "predictive Coding" zu verwenden, bei dem Informationen bereits dekodierter Nutzdaten auch für noch zu dekodierende Nutzdaten benötigt werden.

Im Folgenden wird die Erfindung anhand von Ausführungsbeispielen unter Bezugnahme auf die Zeichnungen im Detail erläutert. So zeigen:
- Figur 1: ein erstes Beispiel für einen zeitlichen Ablauf einer Kommunikation zwischen zwei Mobilfunkgeräten nach einem bekannten Verfahren,
- Figur 2: ein zweites Beispiel für einen zeitlichen Ablauf einer Kommunikation zwischen zwei Mobilfunkgeräten nach einem weiteren bekannten Verfahren,
- Figur 3: ein erstes Beispiel für einen zeitlichen Ablauf einer Kommunikation zwischen zwei Mobilfunkgeräten nach einer ersten Ausführung des erfindungsgemäßen Verfahrens,
- Figur 4: ein zweites Beispiel für einen zeitlichen Ablauf einer Kommunikation zwischen zwei Mobilfunkgeräten nach einer zweiten Ausführung des erfindungsgemäßen Verfahrens,
- Figur 5: ein erstes Ausführungsbeispiel eines Senders und Empfängers, welche Encoder und Decoder enthalten, die nach dem erfindungsgemäßen Verfahren arbeiten,
- Figur 6: ein weiteres Ausführungsbeispiel der Erfindung.

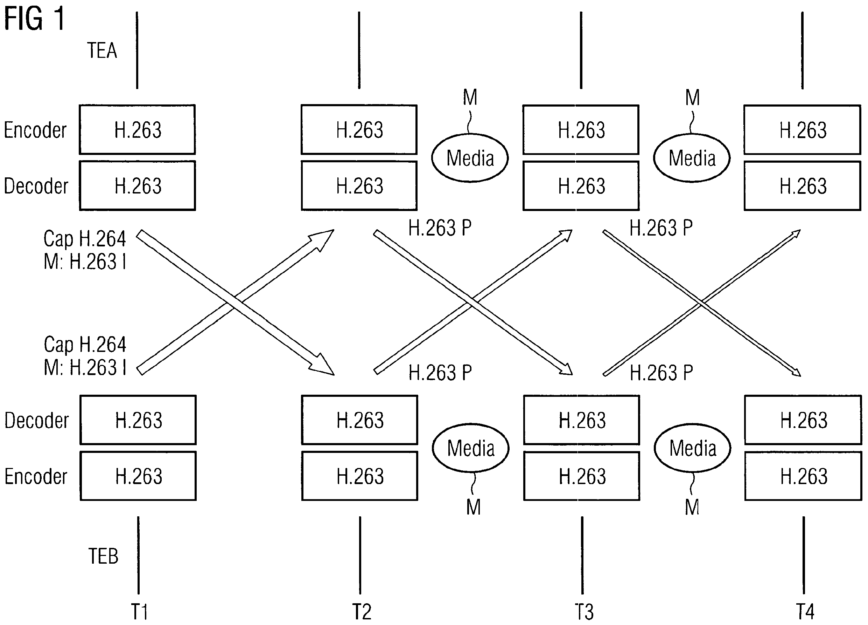

Figur 1 zeigt ein bekanntes Verfahren zum Aufbau einer Kommunikation für eine Videoübertragung zwischen zwei mobilen Kommunikationsgeräten, die mit TEA und TEB bezeichnet sind. Die beiden Kommunikationsgeräte haben bereits im Vorfeld eine Verbindung zwischen einander aufgebaut und darüber Daten ausgetauscht. Dazu gehören beispielsweise eine Identifizierung der beiden Geräte und eine Signalisierung, dass beide Geräte für eine Videoübertragung auch geeignet sind, ohne sich schon genauer über den zu verwendenden Videoübertragungsstandard zu einigen. Beide mobilen Kommunikationsgeräte TEA und TEB besitzen in diesem Ausführungsbeispiel jeweils einen Encoder sowie einen Decoder, der zum Enbeziehungsweise Dekodieren von Videodaten ausgeführt ist. Natürlich kann ebenso eine u-nidirektionale Verbindung, d.h. eine Verbindung nur in eine Richtung aufgebaut werden.

Des Weiteren haben sich beide mobilen Kommunikationsgeräte im Vorfeld darauf geeinigt, eine Videoübertragung durchzuführen. Dazu haben sie jeweils einen Encoder und einen Decoder bereitgestellt und gestartet. Der Decoder ist in der Lage, einen empfangenen Datenstrom nach dem Videostandard H.263 zu dekodieren. Entsprechend können Bilddaten beziehungsweise Videosignale in jedem mobilen Kommunikationsgerät A und B in einen Datenstrom nach dem H.263 Standard umgewandelt und an das jeweils andere mobile Kommunikationsgerät übertragen werden.

Um zu gewährleisten, dass der Benutzer möglichst schnell eine Videodatenübertragung beginnen kann, ist beispielsweise für den Kommunikationsstandard WCDMA/UMTS ein spezielles Verfahren vorgesehen, das mit "Fast Media" (FM) bezeichnet wird. Bei diesem Verfahren beginnen beide mobilen Kommunikationsgeräte A, B nach einer Einigung über eine gemeinsame Videodatenübertragung mit dem Senden entsprechender Videoinformationen. Dies ist in Figur 1 mit dem Medium M bezeichnet. Das mobile Kommunikationsgerät A überträgt zum Zeitpunkt T1 Videodaten M in einem bestimmten Datenstromformat nach dem Videoübertragungsstandard H.263 an das mobile Kommunikationsgerät B. Entsprechend sendet das mobile Kommunikationsgerät B einen Datenstrom mit Videodaten in dem gleichen Format, also nach dem Standard H.263 an das mobile Kommunikationsgerät A.

Beide mobilen Kommunikationsgeräte A und B sind darüber hinaus auch im Stande, den Videoübertragungsstandard H.264 benutzen zu können. Dieser zeichnet sich gegenüber dem Videoübertragungsstandard H.263 dadurch aus, dass er eine deutlich effizientere Kompression bei gleicher Bildqualität ermöglicht. Umgekehrt bedeutet dies, dass sich bei gleich bleibender Übertragungsrate durch den Videostandard H.264 eine deutlich bessere Bildqualität als bei dem bislang von den beiden Terminals verwendeten Videostandards H.263 erreichen lässt.

Parallel zu den eigentlichen Datenströmen, die Videoinformationen gemäß dem H.263 Standard enthalten, überträgt das mobile Kommunikationsgerät A auch die Videoübertragungsstandards, für die es ebenso auch geeignet ist. Dieser Vorgang ist mit Cap, für den englischen Begriff "Capabilities" bezeichnet. Vorliegend ist dies der Standard H.264. Gleiches wird von dem mobilen Kommunikationsgerät B durchgeführt.

Zu den folgenden Zeitpunkten T2 und T3 werden die entsprechenden übertragen Datenströme empfangen, die darin enthaltenen Informationen dekodiert als Videodaten dekodiert und an den jeweiligen Benutzer auf einem Bildschirm ausgegeben. Jedoch erfolgt vorliegend keine Umschaltung auf den neuen, besseren Videoübertragungsstandard H.264, weil dadurch der übertragene Videodatenstrom unterbrochen werden müsste. Dies ist aber seitens des Benutzers nicht gewünscht. Demzufolge wird nun die Kommunikation mit dem schlechteren Videoübertragungsstandard H.263 fortgeführt.

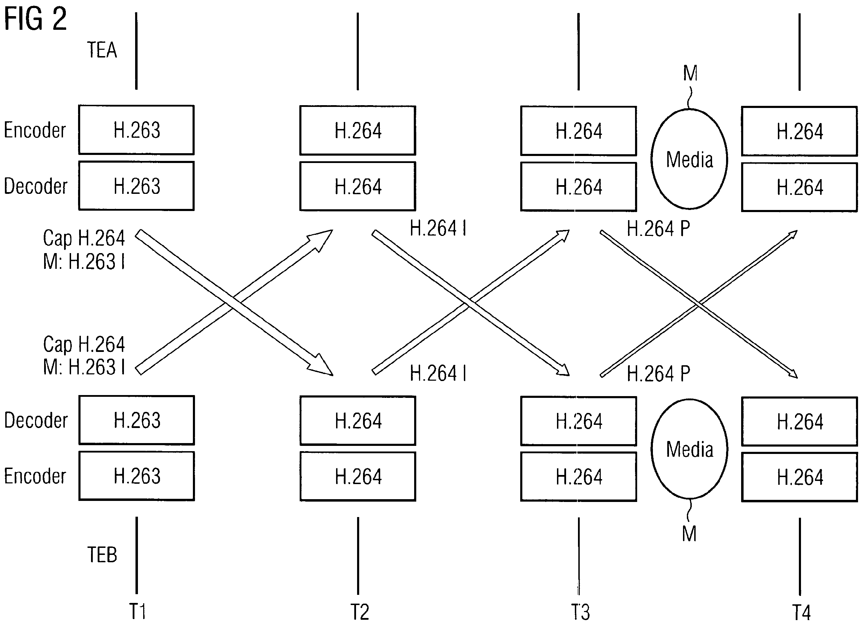

Figur 2 zeigt ein ähnliches Beispiel. Auch hier besitzen beide mobilen Kommunikationsgeräte die Möglichkeit, Videosignale gemäß den Videoübertragungsstandards H.263 und H.264 zu enbeziehungsweise decodieren. Eine Datenübertragung von Bildinformationen beginnt ebenfalls gemäß dem Videoübertragungsstandard H.263 (angezeigt mit M: H.263I). Gleichzeitig übermitteln beide mobilen Kommunikationsgeräte A, B ihre jeweiligen Videoübertragungsstandards, die sie zusätzlich beherrschen. Dies ist wieder vorliegend der verbesserte Videoübertragungsstandard H.264.

Anstatt aber nun die Videoinformationen nach dem Videoübertragungsstandard H.263 auszugeben, werden die bereits übertragenen Videoinformationen verworfen und in den folgenden Zeitpunkten T2 und T3 die Encoder beziehungsweise Decoder für den Standard H.264 gestartet und vorbereitet. Die Ausgabe der Videoinformation beginnt daher erst nach dem Zeitpunkt T3.

Bei den bekannten Verfahren muss daher für eine Umschaltung der Enkodierung beziehungsweise Decodierung der Bildinformationen entweder die bislang verwendeten Decoder deaktiviert und die neuen Decoder neu gestartet werden beziehungsweise die Videoübertragung erfolgt weiterhin mit dem bislang verwendeten Encoder beziehungsweise Decoder. Wenn daher in einem Mobilfunkgerät beispielsweise ein Encoder für einen Videoübertragungsstandard gestartet und verwendet wird, und das andere Mobilfunkgerät keinen passenden Decoder hierfür hat, wird eine Videoübetragung fehlschlagen. Daher müssen Encoder und Decoder für den jeweils gleichen Videoübertragungsstandard vorhanden sein.

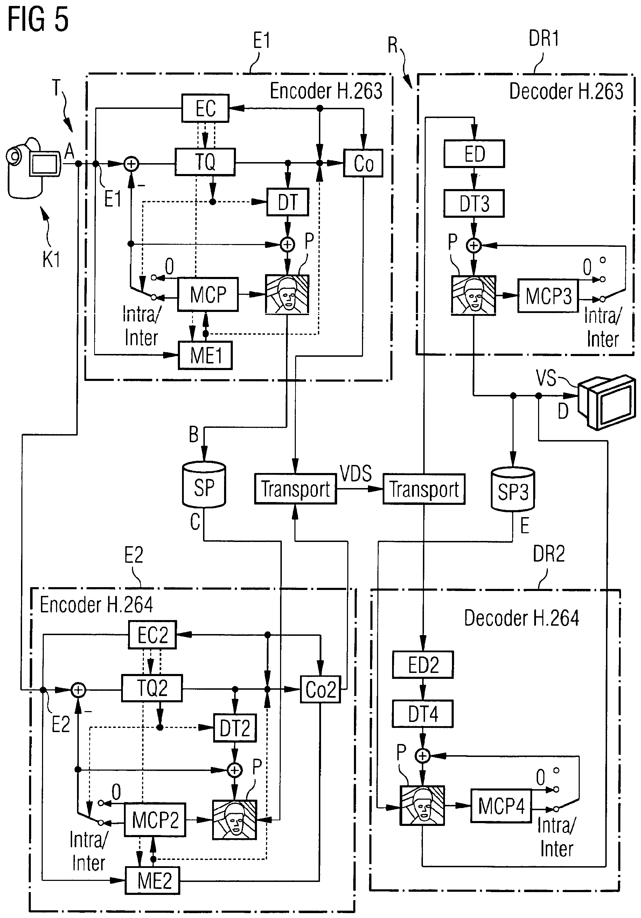

Figur 5 zeigt eine schematische Darstellung eines Senders T und eines Empfängers R, bei dem die oben dargestellte Problematik umgangen werden kann. Der Sender T ist ausgestaltet, ein Videosignal A von einer Kamera Kl mit Hilfe eines ersten Encoders E1 beziehungsweise eines zweiten Encoders E2 in einen nach einem Videoübertragungsstandard kodierten Videodatenstrom umzuwandeln. Im Einzelnen ist der erste Encoder E1 ausgestaltet, aus dem Videosignal A einen Datenstrom nach dem Videoübertragungsstandard H.263 zu erzeugen. Der Encoder E2 ist in der Lage, die Videoinformationen A in einen Videodatenstrom nach dem Videoübertragungsstandard H.264 umzuwandeln.

Dabei ist unter dem Begriff des Umwandeln in einen Videodatenstrom nach einem Videoübertragungsstandard gemeint, dass der erzeugte Datenstrom die Information des Videosignals A umfasst und in einem Datenformat vorliegt, dass in dem jeweiligen Videoübertragungsstandard beschrieben ist. Natürlich kann der Standard auch Angaben über de Encodierung des Videosignals oder die Decodierung des Datenstroms in Nutzdaten enthalten.

Beide Encoder E1 und E2 sind schematisch mit ihren wesentlichen funktionellen Elementen dargestellt. Die einzelnen Elemente können beispielsweise durch verschiedene Softwarefunktionen implementiert werden. So kann beispielsweise in der Sendeeinrichtung T ein Mikroprozessor vorgesehen sein, der die entsprechenden Funktionen für den Encoder E1 beziehungsweise für den Encoder E2 durchführt. Dies ist besonders flexibel, weil so dynamisch neue Videoübertragungsstandards mit Hilfe eines einfachen Softwareupdates im Sender T implementiert werden können. Auch ist ein einfaches Umschalten zwischen verschiedenen Standrad und Applikationen auf diese Weise möglich. Genauso ist es aber denkbar, spezielle applikationsspezifische Schaltungen vorzusehen, die jeweils Videosignale A in einen Videodatenstrom in einem Datenstromformat nach einem Videoübertragungsstandards umwandeln.

In entsprechender Weise umfasst der Empfänger R einen ersten Decoder DR1 sowie einen zweiten Decoder DR2. Der erste Decoder DR1 ist ausgeführt, einen Videodatenstrom, welcher Bildinformationen in einem Datenstromformat nach dem Videoübertragungsstandard H.263 umfasst, in ein Videoausgangssignal B zu dekodieren. In ähnlicher Weise ist der Decoder DR2 ausgeführt, den Videodatenstrom in Bildinformationen zu wandeln. Wie bei dem Transmitter T können auch bei dem Receiver R die beiden Decoder DR1 und DR2 durch Softwarefunktionen implementiert werden.

Beide Encoder E1, E2 verwenden ein so genanntes "predictive coding". Dazu machen sie sich die Eigenschaft zu Nutze, dass zwei aufeinander folgende Videobilder oftmals nur geringfügige Unterschiede aufweisen. Somit ist es möglich, nicht jedes einzelne Videobild, das so genannte Frame, vollständig erfassen zu müssen, sondern lediglich die Veränderungen gegenüber dem vorangegangenen Videobild abzuspeichern.

Dazu besitzen beide Encoder E1 und E2 einen so genannten "Reference Frame Buffer" P. In dem Puffer P ist ein Bild oder mehrere Bilder oder auch ein Teilbild des Videosignals ablegbar. Das Videosignal A, welches beispielsweise dem Eingang E10 des ersten Encoders E1 zugeführt wird, wird in der Einrichtung TQ quantisiert und anschließend in der Einrichtung DT weiterverarbeitet. Der Quantisierer erzeugt eine gerundete Version des Bildes, die dann effizient codiert werden kann. Ein entsprechender Dequantisierer im Decoder macht dies dann wieder rückgängig. Transformation und inverse Transformation im Decoder beschreiben eine diskrete Fourier Transformation oder andere Transformationen, die auf die Bilder oder Teilbilder angewendet wird, um effizienter Kodieren zu können. Die Weiterverarbeitung erfolgt in Abhängigkeit von Steuersignalen einer Enkodierkontrolleinheit EC, die sowohl die Quantisierung in der Einrichtung TQ als auch die weitere Verarbeitung der Einrichtung DT regelt. Das in der Einrichtung DT verarbeitete Bild wird als Referenzdaten in dem "Reference Frame Buffer" P abgelegt.

Auf den Puffer P hat eine Einrichtung MCP, der "Motion Compensated Predictor" Zugriff, welche die Bewegungen der im Referenzpuffer P abgelegten Bilder gegenüber vorangegangenen Bildern vergleicht und daraus entsprechende Informationen erzeugt. Er dient dazu, zu entscheiden, ob für die Kodierung ein vollständiges beziehungsweise ein Teilbild kodiert werden muss, oder lediglich eine Kodierung der Änderungen gegenüber einem vorangegangenen Bild ausreichend ist. Die Einrichtung MCP wird von einem "Bewegungsabschätzer" ME1 angesteuert, der das Videosignal A auf Bewegungen hin untersucht. Die Ausgangsinformationen des "Motion Compensated Predictors" MCP, beispielsweise Bewegungsvektoren, werden den Videosignalinformationen A zugeführt.

Das daraufhin veränderte Signal wird in der Einrichtung TQ ebenfalls quantisiert und anschließend mit einem Kodierverfahren, im allgemeinem einem Entropiecodierverfahren, beispielsweise einem Huffman Code, kodiert. Der kodierte Videodatenstrom liegt somit in einem Datenstromformat vor, das nach dem Videoübertragungsstandard H.263 spezifiziert ist. Der Datenstrom wird dann in einen Transportstrom VDS enkapsuliert, mit dem eine Übertragung an den Empfänger R möglich ist. Dazu eignet sich beispielsweise das "Real Time Protocol" (RTP) oder auch die Protokolle und Vorschläge der ITU-T, die H.223, H.225, H.323, H.324 oder H.320.

Auf die für den Encoder E1 dargestellte Weise ist es möglich, nur die Informationen zu kodieren, welche die Unterschiede zwischen zwei aufeinander folgenden Videobildern kennzeichnen. In mehr oder weniger regelmäßigen Abständen werden zusätzlich Einzelbilder erzeugt und kodiert. Dies erfolgt beispielsweise dann, wenn die Bewegung zu groß ist beziehungsweise ein vollständiger Bildwechsel auftritt, sodass ein Abspeichern lediglich der Änderungen keine Einsparung hervorruft.

Der Transportstrom VDS wird anschließend über eine Luftschnittstelle oder eine drahtgestützte Leitung an den Empfänger R übermittelt. Dort wird aus dem Transportstrom der Videodatenstrom extrahiert und dann dem Decoder DR1 zugeführt. Dieser dekodiert in der Einrichtung ED den Datenstrom dekodiert mit Hilfe der Entropiecodierung und verarbeitet die dekodierten Daten anschließend in der Einrichtung DT3 weiter. Das in den dekodierten Daten enthaltene Bild wird in einer Puffereinrichtung P abgelegt. Eine Einrichtung MCP2 in Form eine "Motion Compensated Predictors" erkennt, ob es sich bei den abgelegten Informationen um ein vollständiges Videobild oder lediglich um Änderungen gegenüber einem vorangegangenen Bild handelt. Auf diese Weise können Informationen, die lediglich Änderungen zu einem vorangegangenen Bild betreffen, in dem "Reference Frame Buffer" P abgelegt werden, in dem der Speicherinhalt des Puffer P teilweise überschrieben wird. Das abgelegte Bild wird im allgemeinen gleichzeitig oder leicht verzögert als Videoinformation D an einen Bildschirm VS abgegeben.

Ein Umschaltvorgang von einem Decoder DR1 auf einen zweiten Decoder DR2 für eine Decodierung von einem Videodatenstrom mit einem unterschiedlichen Videoübertragungsstandard wird bei bekannten Verfahren der bislang verwendete Decoder DR1 vollständig abgeschaltet. Insbesondere wird der "Reference Frame Buffer" P, der die bislang übertragenen Videoinformationen und insbesondere die letzte übertragene Videoinformation beinhaltet, beendet und sein Speicherbereich freigegeben. Gleichzeitig wird der neue Decoder DR2 initialisiert. In entsprechender Weise erfolgt ein derartiger Umschaltvorgang auch auf der Senderseite. Direkt nach einem Umschaltvorgang enthält der neue Encoder E2 wie auch der neue Decoder D2 einen im Wesentlichen leeren Puffer P. Dieser wird erst nach einer Verarbeitung des Videosignals mit einer entsprechenden Information befüllt. Das bedeutet aber auch, dass der neu gestartete Encoder ein neues Bild vollständig kodieren muss, und nicht lediglich die Änderungen gegenüber dem vorangegangenen Bild.

Das vollständige Abschalten des bislang verwendeten En- beziehungsweise Decoders und das Initialisieren des neuen Encoders beziehungsweise Decoders benötigt daher zusätzliche Zeit, wodurch es bei einem derartigen Umschaltvorgang zu einer Unterbrechung des Videodatenstroms kommen kann. Dies macht sich bei einem Benutzer störend bemerkbar. Aus diesem Grund wird bei der Erfindung vorgesehen, dass der neue Decoder DR2 bei einem derartigen Umschaltvorgang nicht mit einem "leeren" Puffer P gestartet wird.

Vielmehr wird ein Referenzbild beziehungsweise eine Referenzinformation, die beispielsweise in Puffer P des ersten Decoders DR1 enthalten ist, in einer Speichereinrichtung SP3 zwischengespeichert und als Referenzdaten E dem "Reference Frame Buffer" P des zweiten Decoders DR2 zugeführt. Damit wird bei einem Initialisierungsvorgang des zweiten Decoders DR2 dieser mit einem Startwert, beispielsweise einem "Reference Frame" beaufschlagt. Hier ist festzuhalten, dass das Format dieses "Reference Frame", also die Daten, die aus dem Puffer P des ersten Decoders DR1 entnommen und in den Puffer des neuen Decoders DR2 für beide Decoder kompatibel ist. Mit anderen Worten bedeutet dies, dass während der Videodatenstrom, aus dem Transportstrom VDS extrahiert nur von einem der beiden Decoder verarbeitet werden kann, sind die Daten aus den Puffern P für beide Decoder verarbeitbar.

In gleicher Weise wird in diesem Beispiel auch im Sender T der neu zu startende Encoder E2 mit Referenzdaten C aus einem Zwischenspeicher SP in seinem Framepuffer P initialisiert. Die Referenzdaten werden aus dem Referenzpuffer P des Encoders E1 gewonnen. Auch hier sind die Daten im Puffer P eines der beiden Encoder lesbar für den jeweils anderen Decoder.

Durch diese Initialisierung sowohl des neuen Decoders DR2 als auch des neuen Encoders E2 ist ein unterbrechungsfreier Entkodierungs- und Decodierungsprozess möglich. Insbesondere können dadurch unterbrechungsfrei weiterhin nur die Änderungen gegenüber dem vorangegangenen Bild enkodiert beziehungsweise dekodiert werden, da der Encoder auf der Senderseite und auch der Decoder auf der Empfangsseite nicht "leer", sondern mit einem Startwert, nämlich dem Inhalt des Puffers des alten Encoders beziehungsweise Decoders gestartet wird.

Kerngedanke der Erfindung ist es daher, bei einem Umschaltvorgang beziehungsweise einem Neuaufsetzen einer Videoübertragung den neuen Decoder beziehungsweise Encoder nicht leer zu initialisieren, sondern mit einem Startwert. Eben dieser Startwert umfasst Informationen eines Referenzbildes, welches im Vorfeld enkodiert beziehungsweise dekodiert wurde. Dadurch lässt sich die Kodierungseffizenz bei einem Umschaltvorgang signifikant erhöhen, da ein bereits vorhandenes Referenzbild im bislang verwendeten Encoder oder Decoder weiter verwendet wird.

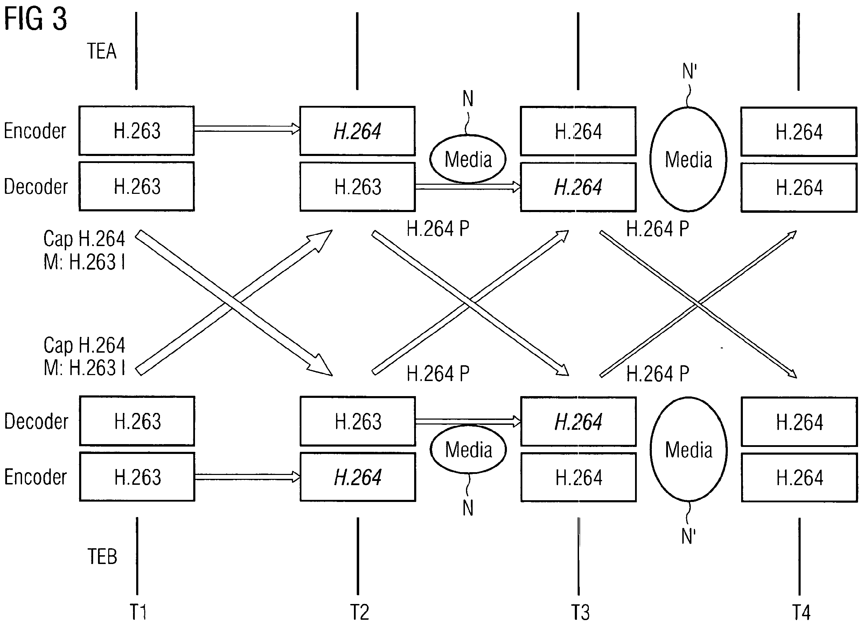

Figur 3 zeigt einen derartigen Verfahrensablauf und den Zeitgewinn bei einer Videodatenübertragung. Zum Zeitpunkt T1 übertragen die beiden Mobilfunkgeräte TEA und TEB jeweils Videoinformationen M:H.263I in dem Datenformat des Videoübertragungsstandard H.263. Vorliegend übertragen sie ein vollständiges Bild an das jeweils andere Mobilfunkgerät. Gleichzeitig übermitteln sie ebenso die Videoübertragungsstandards, die sie ebenfalls beherrschen. Dies wäre vorliegend der Videoübertragungsstandard H.264.

Da der Videoübertragungsstandard H.264 gegenüber den Videoübertragungsstandards H.263 eine deutlich höhere Bandbreiteneffizienz aufweist, ist es zweckmäßig, für den Encodierungs- und Decodierungsvorgang den neuen besseren Videoübertragungsstandard H.264 zu verwenden. Dies bedeutet, dass der Encoder des Mobilfunkgerätes A zum Zeitpunkt T2 gewechselt wird, nachdem das Kommunikationsgerät TEB dem anderen Kommunikationsgerät TEA mitgeteilt hat, dass es auch einen Videodatenstrom im Format des Standards H.264 dekodieren kann. Dazu wird das in dem Reference Frame Buffer P enthaltene Referenzbild in einen Zwischenspeicher geschrieben, der Encoder für den Standard H.263 deaktiviert und der Encoder H.264 gestartet. Dieser wird mit dem im Zwischenspeicher befindlichen Referenzbild initialisiert, welches im Wesentlichen auch dem letzten Bild in dem übertragenen Datenstrom M:H.263I entspricht. In gleicher Weise erfolgt ein Umschalten für die Encoder im mobilen Kommunikationsgerät TEB.

Währenddessen wird der übertragene Videodatenstrom M:H.263I des Gerätes TEB im Kommunikationsgerät TEA dem Decoder für den Videoübertragungsstandard H.263 zugeführt und die darin befindlichen Nutzdaten in Form eines Videobildes N extrahiert. Dieses wird dem Benutzer auf einem Bildschirm angezeigt. Dieser Vorgang wird auch in dem zweiten mobilen Kommunikationsgerät TEB durchgeführt.

Parallel zu dem Decodiervorgang wird in beiden mobilen Kommunikationsgeräten A und B ein neues Videosignal mit Hilfe des neu initialisierten Encoders für den Videoübertragungsstandard H.264 kodiert und übermittelt. Da der Encoder im Gerät TEA als auch der Encoder im Gerät TEB mit einem Referenzbild initialisiert wurde, muss das neue Videosignal als Bild nicht mehr vollständig kodiert werden. Es reicht vielmehr mit Hilfe des im Puffer abgelegten Referenzbildes die Änderungen zu ermitteln, diese in dem Format des H.264 zu kodieren und zu übertragen. In der Figur 3 ist dies mit H.264P bezeichnet, wobei "P" deutlich macht, dass es sich nur noch um die Änderungen handelt.

Während des Zeitraums T3 wird nun ein Referenzbild in den bislang verwendeten Decodierern für den Standard H.263 zwischengespeichert. Anschließend werden die beiden Decodierer für den Standard H.263 in den Mobilfunkgeräten A und B deaktiviert und die neuen Decodierer für den Übertragungsstandard H.264 aktiviert und mit den zwischengespeicherten Referenzbildern initialisiert. Auch dies erfolgt, indem die in den Puffern P der Decodierer für den Standard H.263 gespeicherten Informationen als Referenzdaten in den Puffern der Decodierer für den Standard H.264 abgelegt werden.

Dadurch sind die neu gestarteten Decodierer imstande, die übertragenen Videodaten H.264P direkt zu dekodieren und die darin enthaltenen Änderungen zu verarbeiten. Die so enthaltenen Videobilder N' werden wieder dem Benutzer angezeigt. In den nun folgenden Zeiten sind in beiden Mobilfunkgeräten die Encodierer beziehungsweise Decodierer für den Videoübertragungsstandard H.264 aktiv.

Durch dieses dynamische Umschalten und das Initialisieren des jeweils neu aktivierten Decoders mit einem Referenzbild aus dem bislang verwendeten Decoder lässt sich einerseits ein sehr schneller Aufbau einer Videoübertragung und ein unterbrechungsfreies Umschalten zwischen den verschiedenen Videoübertragungsstandards ermöglichen.

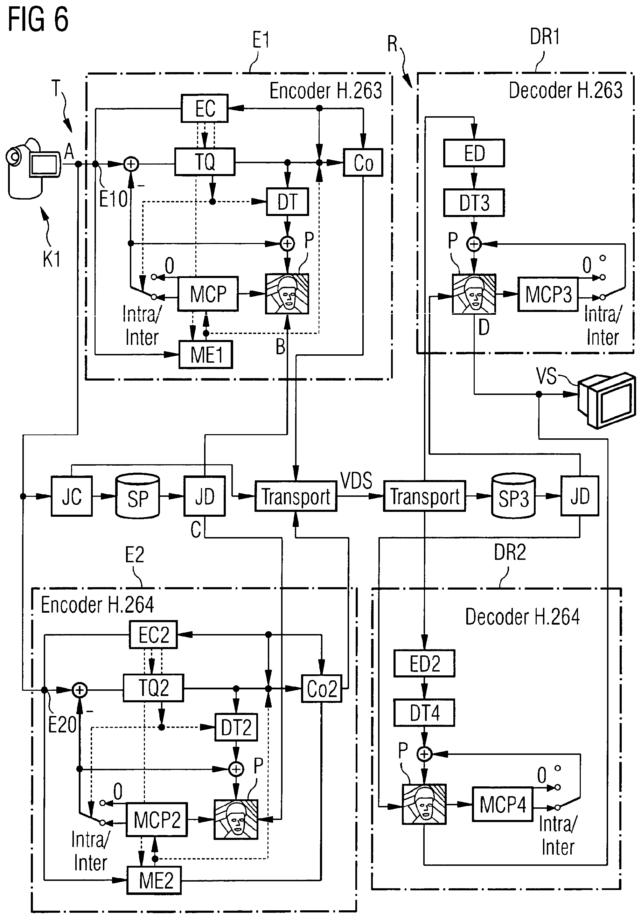

Figur 6 zeigt eine weitere Ausführungsform der Erfindung. Bei dieser ist im Empfänger neben den beiden Decodierern DR1 und DR2 ein Bilddecodierer JD vorgesehen. Dieser ist mit dem Zwischenspeicher SP3 im Empfängers R verbunden, der seinerseits mit dem Eingang des Empfängers gekoppelt ist. In dem Zwischenspeicher SP3 sind komprimierte Referenzdaten ablegbar, die von dem Transmitter T mit dem Transportdatenstrom übermittelt werden. Diese werden von der Dekodiereinheit JD in ein entsprechendes Referenzbild gewandelt und abhängig von dem gewählten Decoder DR1 beziehungsweise DR2 während eines Initialisierungsvorgangs in den entsprechenden "Reference Frame Buffer" P geladen. Das Referenzbild kann ein bestimmtes Format haben, beispielsweise das JPEG-Format, das PNG-Format oder ein anderes Format. Diese kann auch ein verlustfreies Format sein. Durch die Übertragung eines Einzelbildes ist gerade bei einem Beginn einer Videoübertragung eine hohe Flexibilität hinsichtlich des auszuwählenden Videoübertragungsstandard und damit des zu verwendenden Decoders möglich.

Senderseitig wird ein erstes Bild eines Videosignal A von einer Kodiereinrichtung JC in einem Zwischenspeicher SP abgelegt und gleichzeitig an den Empfänger R übermittelt. Diese Ausführungsform eignet sich somit besonders, wenn ein gemeinsamer Videoübertragungsstandard zwischen dem Transmitter T und dem Receiver R noch nicht bekannt ist, oder eine Initialisierung des entsprechenden Decoders zusätzlich Zeit benötigt.

Der Transmitter T umfasst darüber hinaus eine Decodereinrichtung JD die mit der Speichereinrichtung SP gekoppelt ist. Diese erzeugt aus den kodierten Bildinformationen des Videosignals A in der Speichereinrichtung SP Referenzdaten. Bei einer Auswahl eines der beiden Encoders E1 beziehungsweise E2 werden die so erzeugten Referenzdaten dazu verwendet, den entsprechend Framebuffer P des jeweiligen ausgewählten Encoders E1 oder E2 zu initialisieren. Dadurch kann mit Hilfe des in der Speichereinrichtung SP abgelegten kodierten Referenzbildes umgehend nach einer Initialisierung einer Kodierung der Videosignale fortgesetzt werden.

Zudem wird bei der Übertragung des Referenzbildes im Transportstrom auch gleichzeitig signalisiert, in welchen Videoübertragungsstandard die folgenden Informationen kodiert sind. Durch diese Übermittlung wird gewährleistet, dass sowohl auf der Senderseite als auch auf der Empfängerseite eine zeitlich abgestimmte Auswahl beziehungsweise Umschalten des Encoders oder Decoders erfolgt.

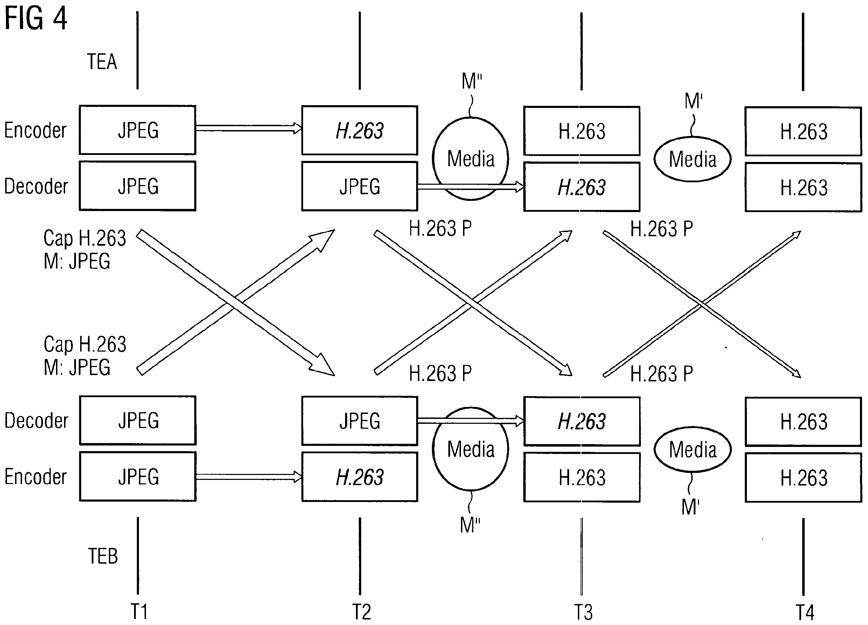

Figur 4 zeigt den entsprechenden zeitlichen Ablauf für dieses Verfahren. Zum Anfangszeitpunkt T1 sind in beiden mobilen Kommunikationsgeräten TEA, TEB ein Encoder beziehungsweise Decoder aktiv, der für die Entkodierung beziehungsweise Decodierung von Bildern im JPG-Format ausgestaltet ist. Entsprechend sendet das mobile Kommunikationsgerät A ein Einzelbild M:JPEG an das Kommunikationsgerät B und umgekehrt. Zudem werden auch hier wieder die möglichen Videoübertragungsstandards mitgeteilt Cap H.263. Zum Zeitpunkt T2 werden die entsprechenden Encoder für den Videoübertragungsstandard H.263 in beiden mobilen Kommunikationsgeräten TEA und TEB gestartet und mit dem übertragenen und in einem Zwischenspeicher abgelegten Bild als Referenz initialisiert. Während das übertragene Bild von den jeweiligen Decodern an die Benutzer auf dem Bildschirm, als Bild M" ausgegeben wird, werden weitere Videosignale von den Encodern gemäß dem Videoübertragungsstandard H.263 unter Verwendung des in ihren Referenzframebuffern abgelegten Referenzbildes kodiert und als Datenstrom H.263P übertragen.

Zum Zeitpunkt T3 wird nun der Decoder in den jeweiligen mobilen Kommunikationsgeräten für den Videoübertragungsstandard H.263 gestartet und mit dem während des vorangegangenen Zeitraums T2 dekodierten JPG-Bild als Referenzbild initialisiert. Die zum Zeitpunkt T3 empfangenen Videoübertragungsdaten H.263P werden nun unter Verwendung des Referenzbildes in den entsprechenden Decodern dekodiert und als Bilder M' ausgegeben.

Wesentlich bei der Erfindung ist, dass sowohl sender- als auch empfangsseitig bei einem Umschaltvorgang immer der jeweilige Encoder beziehungsweise Decoder mit dem gleichen Referenzbild initialisiert wird. Dies kann beispielsweise das jeweils letzte im vorangegangen Decoder befindliche Referenzbild sein. Ebenso ist es zweckmäßig während des Umschaltvorgangs ein entsprechendes Steuersignal an den Empfänger zu übermitteln, in dem die für die Initialisierung des neuen Decoders benötigten Informationen referenziert werden. Beispielsweise kann senderseitig übermittelt werden, dass der bislang verwendete Decoder nun seine Referenzframebuffer in einen Zwischenspeicher schreiben soll. Der neu zu startende Decoder soll dann mit diesen Informationen aus dem Zwischenspeicher initialisiert werden. Durch diese zu übertragenen zusätzlichen Steuersignale ist gewährleistet, dass der empfängerseitig verwendete neue Decoder mit den gleichen Informationen initialisiert wird, mit der auch der senderseitig neue Encoder initialisiert wird. Dadurch ist eine unterbrechungsfreie und gleich bleibende Übertragungsqualität während des Umschaltvorgangs gewährleistet.

Durch die Verwendung von formatunabhängigen Referenzdaten ist gewährleistet, dass auch ein Decoder initialisiert werden kann, der inkompatibel zu dem Format des Datenstroms ist, aus dem die Referenzdaten gewonnen werden. Zudem sind die Referenzdaten, insbesondere in Form eines Referenzbildes dazu geeignet entsprechend skaliert zu werden. Beispielsweise kann ein Referenzbild in der Größe von 176x144 Pixeln, welches aus einem Decoder für ein ersten Datenstromformat entnommen wurde auf ein neues Bild mit der Größe 320x240 interpoliert werden. Dies ist beispielsweise durch einen geeigneten Zwischenspeicher möglich. Nach der Skalierung wird das neue bild als Referenz für die Initialisierung des neu gestarteten Decoders verwendet.

Neben den hier ausgeführten Beispielen für die Videoübertragungsstandards H.263 und H.264 lassen sich natürlich auch andere Videoübertragungsstandards verwenden, beispielsweise einen MPEG-2, MPEG-4, DivX, VC1 oder andere Enkodier- beziehungsweise Dekodierverfahren. Für die Signalisierung, also Steuerung, welche den Wechsel zwischen den Decodern oder die Aktivierung eines bestimmten Decoders regelt, sind ebenso verschiedene Protokolle möglich. Beispielsweise lassen sich im Videoübertragungsstandard H.264 zusätzliche Informationen in Form von SEI-Nachrichten ("Supplemental Enhancement Information" unterbringen, in der die Signalisierung angezeigt werden kann. Ebenso ist es möglich, neben dem eigentlichen Videodatenstrom weitere Informationen zu übertragen. Dafür stehen verschiedene Protokolle z.B. das "Session Description Protocol", das "Session Initiation Protocol" oder die H.245 Spezifikation zur Verfügung.

Auch ist die Erfindung nicht auf drahtlose Kommunikation beschränkt. So erlaubt die Erfindung unabhängig von den zu übertragenden Informationen einen Wechsel zwischen verschiedenen Encodier- beziehungsweise Decodierverfahren, solange bei einem Initialisierungsvorgang eines neuen Encoders beziehungsweise Decoders zusätzlich Referenzinformationen aus dem bislang verwendeten Encoder beziehungsweise Decoder in den neuen eingespeist werden.

### Bezugszeichenliste:

- T:: Sender, Transmitter
- R:: Empfänger, Receiver
- A:: Videosignal
- E1, E2:: Encoder
- DR1, DR2:: Decoder
- E10, E20:: Eingänge
- ME1, ME2:: Bewegungsabschätzer, Motion Estimator
- TQ1, TQ2:: Transformator, Quantizer
- MCP, MCP2:: Motion Compensated Predictor
- EC, EC2:: Enkodierkontrolleinheit
- DT, DT2:: Deq./Inv. Transform
- Co, Co2:: Entropy-Encoder
- ED, ED2:: Entropy-Decoder
- DT3, DT4:: Deq./Inv. Transform
- MCP3, MCP4:: Motion Compensated Predictor
- SP, SP3:: Zwischenspeicher
- JC:: Bildencoder
- JD:: Bilddecoder
- P:: Puffer, Frame-Puffer
- D:: Videobild, Nutzdaten
- VDS:: Transportstrom

## Patentansprüche

1. Verfahren zum Dekodieren eines Videodatenstroms, umfassend die Schritte:
- Bereitstellen eines ersten Dekodiermittel (DR2) mit einem ersten Puffer (7), wobei das erste Dekodiermittel (DR2) ausgestaltet ist, aus einem Videodatenstrom einen ersten Datenblock und einen zweiten Datenblock unter Verwendung eines ersten Videoübertragungsstandards zu dekodieren, wobei der zweite Datenblock unter Verwendung von unter Verwendung des ersten Blocks erzeugten Referenzdaten mittels "motion compensated prediction" dekodiert wird und wobei die Referenzdaten im ersten Puffer (P) gespeichert werden;
- Aktualisieren der im ersten Puffer (P) gespeicherten Referenzdaten basierend auf dem zweiten Datenblock, um aktualisierte Referenzdaten zu erzeugen;
- Bereitstellen eines zweiten Dekodiermittels (DR1) mit einem zweiten Puffer (P), wobei das zweite Dekodiermittel (DR1) ausgestaltet ist, Videodatenströme unter Verwendung eines zweiten Videoübertragungsstandards zu dekodieren;
- Empfangen eines Steuersignals, das angibt, dass der Videodatenstrom nachfolgend unter Verwendung des zweiten Videoübertragungsstandards zu übertragen ist;
- Initialisieren des zweiten Dekodiermittels (DR1) unter Verwendung der im ersten Puffer (P) gespeicherten aktualisierten Referenzdaten in Antwort auf den Empfang des Steuersignals, wobei das Initialisieren des zweiten Dekodiermittels (DR1) umfasst, die aktualisierten Referenzdaten im zweiten Puffer (P) zu speichern; und
- Dekodieren eines dritten Datenblocks des Videodatenstroms unter Verwendung des zweiten Dekodiermittels (DR1) nach dem Empfang des Steuersignals, wobei das zweite Dekodiermittel (DR1) den dritten Datenblock unter Verwendung der im zweiten Puffer (P) gespeicherten aktualisierten Referenzdaten und unter Verwendung des zweiten Videoübertragungsstandards mittels "motion compensated prediction" dekodiert.

2. Verfahren nach Anspruch 1, weiter umfassend, die im zweiten Puffer (P) gespeicherten aktualisierten Referenzdaten basierend auf dem dritten Datenblock zu aktualisieren, um weitere aktualisierte Referenzdaten zu erzeugen.

3. Verfahren nach Anspruch 2, bei dem das zweite Dekodiermittel (DR1) ausgestaltet ist, einen vierten Datenblock des Videodatenstroms unter Verwendung der im zweiten Speicher (P) gespeicherten weiteren Referenzdaten mittels, 'motion compensated prediction' 'und unter Verwendung des zweiten Videoübertragungsstandards zu dekodieren.

4. Verfahren nach einem der Ansprüche 1 bis 3, bei dem ein Format der aktualisierten Referenzdaten und der weiteren aktualisieren Referenzdaten unabhängig von dem ersten Videoübertragungsstandard oder dem zweiten Videoübertragungsstandard ist.

5. Verfahren nach einem der Ansprüche 1 bis 4, bei dem der Schritt des Initialisierens des zweiten Dekodiermittels (DR1) die Schritte umfasst:
- Kopieren der aktualisierten Referenzdaten in einen Zwischenspeicher (SP3); und
- Bereitstellen der aktualisierten Referenzdaten von dem Zwischenspeicher (SP3) zu dem zweiten Dekodiermittel (DR2).

6. Verfahren nach einem der Ansprüche 1 bis 5, bei dem das Verfahren ferner die Schritte umfasst:
- Empfangen initialer Referenzdaten des Videodatenstroms vor dem Empfang des ersten Datenblocks, wobei die initialen Referenzdaten in Form eines Einzelbildes empfangen werden; und
- Initialisieren des ersten Dekodiermittels (DR2) basierend auf den initialen Referenzdaten,
wobei das Initialisieren des ersten Dekodiermittels (DR2) umfasst, die initialen Referenzdaten im ersten Puffer (P) zu speichern, nachdem das Einzelbild von einer weiteren Dekodiereinheit (JD) in die initialen Referenzdaten umgewandelt worden ist.

7. Verfahren nach Anspruch 6, bei dem der Videodatenstrom und das Steuersignal in einem Transportdatenstrom (VDS) empfangen werden, wobei das erste Dekodiermittel (DR2) unter Verwendung im zweiten Puffer (P) des zweiten Dekodiermittels (DR1) gespeicherter Referenzdaten in Antwort auf einen Empfang eines nachfolgenden Steuersignals initialisiert wird, das angibt, dass der Videodatenstrom nachfolgend unter Verwendung des ersten Videoübertragungsstandards zu übertragen ist, wobei das nachfolgende Steuersignal nach dem Dekodieren des dritten Datenblocks mittels, 'motion compensated prediction' 'empfangen wird.

8. Verfahren nach Anspruch 7, bei dem das Verfahren ferner die Schritte umfasst:
- Deaktivieren des ersten Dekodiermittels (DR2) basierend auf dem Steuersignal; und
- Aktivieren des zweiten Dekodiermittels (DR1) basierend auf dem Steuersignal, wobei das Initialisieren des zweiten Dekodiermittels (DR1) nach dem Aktivieren des zweiten Dekodiermittels (DR1) durchgeführt wird.

9. Verfahren nach einem der Ansprüche 6 bis 8, bei dem der Transportdatenstrom (VDS) wenigstens eines der folgenden Formate aufweist:
- IETF "Real TimeProtocol (RTP)" Format;
- ITU-T Recommendation H.324;
- ITU-T Recommendation H.323;
- ITU-T Recommendation H.320;
- ITU-T Recommendation H.223;
- ITU-T Recommendation H.225.

10. Verfahren nach einem der Ansprüche 6 bis 7, bei dem das Steuersignal wenigstens eines der folgenden Formate aufweist:
- ITU-T Recommendation H.264, SEI-Nachrichten;
- ITU-T Recommendation H.245;
- Session Description Protocol (SDP);
- Session Initiation Protocol (SIP).

11. Verfahren nach Anspruch 1, bei dem der erste Videoübertragungsstandard und/oder der zweite Videoübertragungsstandard unterschiedlich Videoübertragungsstandards sind und aus den folgenden Videoübertragungsstandards ausgewählt werden:
- ein Bildformat nach dem JPEG Standard;
- ein Bildformat nach dem PNG Standard;
- ein Bildformat nach dem GIF Standard;
- einen Videodatenübertragungsstandard H.263 der ITU;
- einen Videodatenübertragungsstandard H.264 der ITU;
- einen Videodatenübertragungsstandard MPEG-2 der ISO;
- einen Videodatenübertragungsstandard MPEG-4 der ISO;
- einen Videodatenübertragungsstandard VC1 der SMTPE.

12. Verfahren nach einem der Ansprüche 1 bis 11, den Schritt umfassend:
- Ausgeben des ersten dekodierten Datenblocks, des zweiten dekodierten Datenblocks und des dritten Datenblocks an einen Bildschirm (VS).

13. Verfahren nach einem der Ansprüche 1 bis 12, bei dem der dekodierte erste Datenblock einem ersten Bild, der dekodierte zweite Datenblock einem zweiten Bild und der dritte dekodierte Datenblock einem dritten Bild entsprechen.

14. Sender, umfassend:
- ein erstes Enkodiermittel (E1) mit einem ersten Puffer (P), wobei das erste Endkodiermittel (E1) ausgestaltet ist, einen Videodatenstrom unter Verwendung eines ersten Videoübertragungsstandards zu kodieren, wobei das erste Enkodiermittel (E1) einen zweiten Datenblock des Videostroms unter Verwendung von unter Verwendung eines ersten Datenblocks des Videodatenstroms erzeugten Referenzdaten mittels "motion compensated prediction" zu kodieren und wobei die Referenzdaten in dem ersten Puffer (P) gespeichert werden;
- ein Mittel zum Aktualisieren der im ersten Puffer (P) gespeicherten Referenzdaten basierend auf dem zweiten Datenblock, um aktualisierte Referenzdaten zu erzeugen;
- ein zweites Enkodiermittel (E2) mit einem zweiten Puffer (P), wobei das zweite Enkodiermittel (E2) ausgestaltet ist, den Videodatenstrom unter Verwendung eines zweiten Videoübertragungsstandards zu kodieren, wobei das zweite Enkodiermittel (E2) einen dritten Datenblock des Videodatenstroms unter Verwendung des zweiten Videoübertragungsstandards kodiert;
- ein Mittel zum Initialisieren des zweiten Enkodiermittels (E2) unter Verwendung der im ersten Puffer (P) gespeicherten aktualisierten Referenzdaten, wobei die Initialisierung des zweiten Enkodiermittels (E2) umfasst, die aktualisierten Referenzdaten im zweiten Puffer (P) zu speichern, wobei das zweite Enkodiermittel (E2) den dritten Datenblock unter Verwendung der im zweiten Puffer (P) gespeicherten aktualisierten Referenzdaten und unter Verwendung des zweiten Videoübertragungsstandards mittels "motion compensated prediction" kodiert;
- ein Mittel zum Wechsel von dem ersten Enkodiermittel (E1) zu dem zweiten Enkodiermittel (E2), wobei das Mittel zum Initialisieren des zweiten Enkodiermittels (E2) auf das Mittel zum Wechsel anspricht, um das zweite Enkodiermittel (E2) zu initialisieren; und
- ein Mittel um einem Empfänger zu signalisieren in welchem Videoübertragungsstandard die folgende Datenblocken kodiert sind.

15. Sender nach Anspruch 14, wobei der Sender ausgestaltet ist, nach einem Aufbau einer Datenverbindung den Videodatenstrom zu übertragen und einen Signalisierungsdatenstrom zu erzeugen, der die im Sender verfügbaren Videoübertragungsstandards anzeigt.

16. Empfänger, umfassend:
- ein Mittel zum Empfang eines gemäß einem ersten Videoübertragungsstandard oder einem zweiten Videoübertragungsstandard formatierten Videodatenstroms;
- ein erstes Dekodiermittel (DR2) mit einem ersten Puffer (P), wobei das erste Dekodiermittel (DR2) ausgestaltet ist, aus dem Videodatenstrom einen ersten Datenblock unter Verwendung des ersten Videoübertragungsstandards zu dekodieren, wobei ein zweiter Datenblock unter Verwendung von unter Verwendung des ersten Datenblocks erzeugten Referenzdaten mittels "motion compensated prediction" dekodiert wird und wobei die Referenzdaten im ersten Puffer (P) gespeichert werden;
- ein Mittel zum Aktualisieren der im ersten Puffer (P) gespeicherten Referenzdaten basierend auf dem zweiten Datenblock, um aktualisierte Referenzdaten zu erzeugen;
- ein zweites Dekodiermittel (DR1) mit einem zweiten Puffer (P), wobei das zweite Dekodiermittel (DR1) ausgestaltet ist, aus dem Videodatenstrom einen dritten Datenblock unter Verwendung des zweiten Videoübertragungsstandards zu empfangen und zu dekodieren;
- ein Mittel zum Initialisieren des zweiten Dekodiermittels (DR1) unter Verwendung der im ersten Puffer (P) gespeicherten aktualisierten Referenzdaten, wobei das Initialisieren des zweiten Dekodiermittels (DR1) umfasst, die aktualisierten Referenzdaten im zweiten Puffer (P) zu speichern, wobei das zweite Dekodiermittel (DR1) den dritten Datenblock unter Verwendung der im zweiten Puffer (P) gespeicherten aktualisierten Referenzdaten und unter Verwendung des zweiten Videoübertragungsstandards mittels "motion compensated prediction" dekodiert; und
- ein Mittel zum Wechsel von dem ersten Dekodiermittel (DR2) zu dem zweiten Dekodiermittel (DR1) in Antwort auf eine Änderung des Videoübertragungsstandards, wobei das Mittel zum Initialisieren des zweiten Dekodiermittels (DR1) auf das Mittel zum Wechseln anspricht, um das zweite Dekodiermittel (DR1) zu initialisieren.

17. Empfänger nach Anspruch 16, bei dem der erste Puffer (P) des ersten Dekodiermittels (DR2) mit dem zweiten Puffer (P) des zweiten Dekodiermittels (DR1) über einen Zwischenspeicher (SP) gekoppelt ist.

18. Empfänger nach einem der Ansprüche 16 bis 17, bei dem der erste Videoübertragungsstandard und/oder der zweite Videoübertragungsstandard unterschiedliche Videoübertragungsstandards sind und wenigstens von einem der folgenden Formate gewählt sind:
- ein Bildformat nach dem JPEG Standard;
- ein Bildformat nach dem PNG Standard;
- ein Bildformat nach dem GIF Standard;
- einen Videodatenübertragungsstandard H.263 der ITU;
- einen Videodatenübertragungsstandard H.264 der ITU;
- einen Videodatenübertragungsstandard MPEG-2 der ISO;
- einen Videodatenübertragungsstandard MPEG-4 der ISO;
- einen Videodatenübertragungsstandard VC1 der SMTPE.

19. Empfänger nach einem der Ansprüche 16 bis 18, bei dem der Empfänger ferner umfasst:
- ein Mittel zum Aktualisieren der im zweiten Puffer (P) gespeicherten aktualisierten Referenzdaten basierend auf dem dritten Datenblock, um weiter aktualisierte Referenzdaten zu erzeugen, wobei das zweite Dekodiermittel (DR1) einen vierten Datenblock aus dem Videodatenstrom unter Verwendung der im zweiten Speicher (P) gespeicherten weiteren Referenzdaten und des zweiten Videoübertragungsstandards mittels, 'motion compensated prediction' 'dekodiert.

20. Empfänger nach einem der Ansprüche 16 bis 19, bei dem das erste Dekodiermittel (DR2) und/oder das zweite Dekodiermittel (DR1) durch einen Datenverarbeitungsprozessor und eine auf dem Prozessor laufende Software gebildet ist.

21. Empfänger nach einem der Ansprüche 18 bis 20, bei dem das erste Dekodiermittel (DR2) und/oder das zweite Dekodiermittel (DR1) mit einer integrierten Schaltung gebildet ist.

22. Empfänger nach einem der Ansprüche 16 bis 21, bei dem der Empfänger ausgestaltet ist, in einem Betrieb nach einem Aufbau der Datenverbindung zwischen dem Empfänger und einem Sender einen Videodatenstrom unter Verwendung des ersten Videoübertragungsstandards zu empfangen und zu dekodieren.

23. Empfänger nach Anspruch 22, bei dem der Empfänger ausgestaltet ist, aus einem Signal des Senders einen Signalisierungsdatenstrom zu extrahieren, der die im Sender verfügbare Videoübertragungsstandards anzeigt, und das Verfahren nach einem der Ansprüche 1 bis 14 abhängig von dem Steuersignal, das einen bestimmten, vom Sender zum Kodieren des Videodatenstroms verwendeten Videoübertragungsstandard angibt, durchzuführen.

## Claims

1. Method for decoding a video data stream, comprising the steps of:
- providing a first decoding means (DR2) with a first buffer (7), wherein the first decoding means (DR2) is configured to decode a first block of data and a second block of data from a video data stream using a first video transmission standard, wherein the second block of data is decoded by motion compensated prediction using reference data generated using the first block, and wherein the reference data are stored in the first buffer (P);
- updating the reference data stored in the first buffer (P) based on the second block of data to generate updated reference data;
- providing a second decoding means (DR1) with a second buffer (P), wherein the second decoding means (DR1) is configured to decode video data streams using a second video transmission standard;
- receiving a control signal indicating that the video data stream is to be subsequently transmitted using the second video transmission standard;
- in response to receiving the control signal, initializing the second decoding means (DR1) using the updated reference data stored in the first buffer (P), wherein initializing the second decoding means (DR1) includes storing the updated reference data in the second buffer (P); and
- subsequent to receiving the control signal, decoding a third block of data of the video data stream using the second decoding means (DR1), wherein the second decoding means (DR1) decodes the third block of data by motion compensated prediction using the updated reference data stored in the second buffer (P) and using the second video transmission standard.

2. Method according to claim 1, further comprising updating the updated reference data stored in the second buffer (P) based on the third block of data to generate additional updated reference data.

3. Method according to claim 2, wherein the second decoding means (DR1) is configured to decode a fourth block of data of the video data stream by motion compensated prediction using the additional reference data stored in the second memory (P) and using the second video transmission standard.

4. Method according to any of claims 1 to 3, wherein a format of the updated reference data and the additional updated reference data is independent from the first video transmission standard or the second video transmission standard.

5. Method according to any of claims 1 to 4, wherein the step of initializing the second decoding means (DR1) comprises the steps of:
- copying the updated reference data to a temporary memory (SP3); and
- providing the updated reference data from the temporary memory (SP3) to the second decoding means (DR2).

6. Method according to any of claims 1 to 5, wherein the method further comprises the steps of:
- prior to receiving the first block of data, receiving initial reference data of the video data stream, wherein the initial reference data are received in the form of a single image; and
- initializing the first decoding means (DR2) based on the initial reference data,
wherein initializing the first decoding means (DR2) includes storing the initial reference data in the first buffer (P) after the single image has been converted to the initial reference data by a further decoding unit (JD).

7. Method according to claim 6, wherein the video data stream and the control signal are received in a transport data stream (VDS), wherein the first decoding means (DR2) is initialized using reference data stored in the second buffer (P) of the second decoding means (DR1) in response to receiving a subsequent control signal indicating that the video data stream is to be subsequently transmitted using the first video transmission standard, wherein the subsequent control signal is received after decoding the third block of data by motion compensated prediction.

8. Method according to claim 7, wherein method further comprises the steps of:
- deactivating the first decoding means (DR2) based on the control signal; and
- activating the second decoding means (DR1) based on the control signal, wherein initialization of the second decoding means (DR1) is performed after activation of the second decoding means (DR1).

9. Method according to any of claims 6 to 8, wherein the transport data stream (VDS) comprises at least one of the following formats:
- IETF "Real-Time Protocol (RTP)" format;
- ITU-T Recommendation H.324;
- ITU-T Recommendation H.323;
- ITU-T Recommendation H.320;
- ITU-T Recommendation H.223;
- ITU-T Recommendation H.225.

10. Method according to any of claims 6 to 7, wherein the control signal comprises at least one of the following formats:
- ITU-T Recommendation H.264, SEI messages;
- ITU-T Recommendation H.245;
- Session Description Protocol (SDP);
- Session Initiation Protocol (SIP).

11. Method according to claim 1, wherein the first video transmission standard and/or the second video transmission standard are different video transmission standards, and are selected from the following video transmission standards:
- an image format according to the JPEG standard;
- an image format according to the PNG standard;
- an image format according to the GIF standard;
- a video data transmission standard H.263 of the ITU;
- a video data transmission standard H.264 of the ITU;
- a video data transmission standard MPEG-2 of the ISO;
- a video data transmission standard MPEG-4 of the ISO;
- a video data transmission standard VC1 of the SMTPE.

12. Method according to any of claims 1 to 11, comprising the step of:
- outputting the first decoded block of data, the second decoded block of data, and the third block of data at a display device (VS).

13. Method according to any of claims 1 to 12, wherein the decoded first block of data corresponds to a first image, the decoded second block of data corresponds to a second image, and the third decoded block of data corresponds to a third image.

14. Transmitter, comprising:
- first encoding means (E1) with a first buffer (P), wherein the first encoding means (E1) is configured to encode a video data stream using a first video transmission standard, wherein the first encoding means (E1) encodes a second block of data of the video stream by motion compensated prediction using reference data generated using a first block of data of the video data stream, and wherein the reference data are stored in the first buffer (P);
- means for updating the reference data stored in the first buffer (P) based on the second block of data to generate updated reference data;
- second encoding means (E2) with a second buffer (P), wherein the second encoding means (E2) is configured to encode the video data stream using a second video transmission standard, wherein the second encoding means (E2) encodes a third block of data of the video data stream using the second video transmission standard;
- means for initializing the second encoding means (E2) using the updated reference data stored in the first buffer (P), wherein initializing the second encoding means (E2) includes storing the updated reference data in the second buffer (P), wherein the second encoding means (E2) encodes the third block of data by motion compensated prediction using the updated reference data stored in the second buffer (P) and using the second video transmission standard;
- means for switching from the first encoding means (E1) to the second encoding means (E2), wherein the means for initializing the second encoding means (E2) is responsive to the means for switching to initialize the second encoding means (E2); and
- means for signaling to a receiving device in which video transmission standard the next blocks of data are encoded.

15. Transmitter according to claim 14, wherein the transmitter is configured to transmit the video data stream after a setup of a data connection and to generate a signaling data stream indicating the video transmission standards available in the transmitter.

16. Receiver, comprising:
- means for receiving a video data stream formatted according to a first video transmission standard or in a second video transmission standard;
- a first decoding means (DR2) with a first buffer (P), wherein the first decoding means (DR2) is configured to decode a first block of data from the video data stream using the first video transmission standard, wherein a second block of data is decoded by motion compensated prediction using reference data generated using the first block of data, and wherein the reference data are stored in the first buffer (P);
- means for updating the reference data stored in the first buffer (P) based on the second block of data to generate updated reference data;
- a second decoding means (DR1) with a second buffer (P), wherein the second decoding means (DR1) is configured to receive and decode a third block of data from the video data stream using the second video transmission standard;
- means for initializing the second decoding means (DR1) using the updated reference data stored in the first buffer (P), wherein initializing the second decoding means (DR1) includes storing the updated reference data in the second buffer (P), wherein the second decoding means (DR1) decodes the third block of data by motion compensated prediction using the updated reference data stored in the second buffer (P) and using the second video transmission standard; and
- means for switching from the first decoding means (DR2) to the second decoding means (DR1) in response to a change in the video transmission standard, wherein the means for initializing the second decoding means (DR1) is responsive to the means for switching to initialize the second decoding means (DR1).

17. Receiver according to claim 16, wherein the first buffer (P) of the first decoding means (DR2) is coupled with the second buffer (P) of the second decoding means (DR1) via a temporary memory (SP).

18. Receiver according to any of claims 16 to 17, wherein the first video transmission standard and/or the second video transmission standard are different video transmission standards and are selected from at least one of the following formats:
- an image format according to the JPEG standard;
- an image format according to the PNG standard;
- an image format according to the GIF standard;
- a video data transmission standard H.263 of the ITU;
- a video data transmission standard H.264 of the ITU;
- a video data transmission standard MPEG-2 of the ISO;
- a video data transmission standard MPEG-4 of the ISO;
- a video data transmission standard VC1 of the SMTPE.

19. Receiver according to any of claims 16 to 18, wherein the receiver further comprises:
- means for updating the updated reference data stored in the second buffer (P) based on the third block of data to generate additional updated reference data, wherein the second decoding means (DR1) decodes a fourth block of data from the video data stream by motion compensated prediction using the additional reference data stored in the second memory (P) and the second video transmission standard.

20. Receiver according to any of claims 16 to 19, wherein the first decoding means (DR2) and/or the second decoding means (DR1) are formed by a data processing processor and a software running on the processor.

21. Receiver according to any of claims 18 to 20, wherein the first decoding means (DR2) and/or the second decoding means (DR1) are formed with an integrated circuit.

22. Receiver according to any of claims 16 to 21, wherein the receiver is configured to receive and to decode a video data stream using the first video transmission standard during operation after a setup of the data connection between the receiver and a transmitter.

23. Receiver according to claim 22, wherein the receiver is configured to extract, from a signal of the transmitter, a signaling data stream that indicates the video transmission standards available in the transmitter, and to execute the method according to any of claims 1 to 14 depending on the control signal that indicates a particular video transmission standard used by the transmitter to encode the video data stream.

## Revendications

1. Un procédé de décodage d'un flux de données vidéo, comprenant les opérations suivantes :
- la fourniture d'un premier moyen de décodage (DR2) avec une première mémoire tampon (7), où le premier moyen de décodage (DR2) est configuré de façon à décoder un premier bloc de données et un deuxième bloc de données à partir d'un flux de données vidéo au moyen d'une première norme de transmission vidéo, où le deuxième bloc de données est décodé par une prédiction à compensation de mouvement au moyen de données de référence générées au moyen du premier bloc, et où les données de référence sont conservées en mémoire dans la première mémoire tampon (P),
- l'actualisation des données de référence conservées en mémoire dans la première mémoire tampon (P) en fonction du deuxième bloc de données de façon à générer des données de référence actualisées,
- la fourniture d'un deuxième moyen de décodage (DR1) avec une deuxième mémoire tampon (P), où le deuxième moyen de décodage (DR1) est configuré de façon à décoder des flux de données vidéo au moyen d'une deuxième norme de transmission vidéo,
- la réception d'un signal de commande indiquant que le flux de données vidéo doit être transmis subséquemment au moyen de la deuxième norme de transmission vidéo,
- en réponse à la réception du signal de commande, l'initialisation du deuxième moyen de décodage (DR1) au moyen des données de référence actualisées conservées en mémoire dans la première mémoire tampon (P), où l'initialisation du deuxième moyen de décodage (DR1) comprend la conservation en mémoire des données de référence actualisées dans la deuxième mémoire tampon (P), et
- suite à la réception du signal de commande, le décodage d'un troisième bloc de données du flux de données vidéo au moyen du deuxième moyen de décodage (DR1), où le deuxième moyen de décodage (DR1) décode le troisième bloc de données par une prédiction à compensation de mouvement au moyen des données de référence actualisées conservées en mémoire dans la deuxième mémoire tampon (P) et au moyen de la deuxième norme de transmission vidéo.

2. Le procédé selon la Revendication 1, comprenant en outre l'actualisation des données de référence actualisées conservées en mémoire dans la deuxième mémoire tampon (P) en fonction du troisième bloc de données de façon à générer des données de référence actualisées additionnelles.

3. Le procédé selon la Revendication 2, où le deuxième moyen de décodage (DR1) est configuré de façon à décoder un quatrième bloc de données du flux de données vidéo par une prédiction à compensation de mouvement au moyen des données de référence additionnelles conservées en mémoire dans la deuxième mémoire (P) et au moyen de la deuxième norme de transmission vidéo.

4. Le procédé selon l'une quelconque des Revendications 1 à 3, où un format des données de référence actualisées et des données de référence actualisées additionnelles est indépendant de la première norme de transmission vidéo ou de la deuxième norme de transmission vidéo.

5. Le procédé selon l'une quelconque des Revendications 1 à 4, où l'opération d'initialisation du deuxième moyen de décodage (DR1) comprend les opérations suivantes :
- la copie des données de référence actualisées vers une mémoire temporaire (SP3), et
- la fourniture des données de référence actualisées de la mémoire temporaire (SP3) au deuxième moyen de décodage (DR2).

6. Le procédé selon l'une quelconque des Revendications 1 à 5, où le procédé comprend en outre les opérations suivantes :
- avant la réception du premier bloc de données, la réception de données de référence initiales du flux de données vidéo, où les données de référence initiales sont reçues sous la forme d'une image unique, et
- l'initialisation du premier moyen de décodage (DR2) en fonction des données de référence initiales, où l'initialisation du premier moyen de décodage (DR2) comprend la conservation en mémoire des données de référence initiales dans la première mémoire tampon (P) après la conversion de l'image unique en les données de référence initiales par une autre unité de décodage (JD).

7. Le procédé selon la Revendication 6, où le flux de données vidéo et le signal de commande sont reçus dans un flux de données de transport (VDS), où le premier moyen de décodage (DR2) est initialisé au moyen de données de référence conservées en mémoire dans la deuxième mémoire tampon (P) du deuxième moyen de décodage (DR1) en réponse à la réception d'un signal de commande subséquent indiquant que le flux de données vidéo doit être transmis subséquemment au moyen de la première norme de transmission vidéo, où le signal de commande subséquent est reçu après le décodage du troisième bloc de données par une prédiction à compensation de mouvement.

8. Le procédé selon la Revendication 7, où le procédé comprend en outre les opérations suivantes :
- la désactivation du premier moyen de décodage (DR2) en fonction du signal de commande, et
- l'activation du deuxième moyen de décodage (DR1) en fonction du signal de commande, où l'initialisation du deuxième moyen de décodage (DR1) est exécutée après l'activation du deuxième moyen de décodage (DR1).

9. Le procédé selon l'une quelconque des Revendications 6 à 8, où le flux de données de transport (VDS) comprend au moins un des formats suivants :
- Format IETF "Protocole en Temps Réel (RTP)",
- Recommandation UIT-T H.324,
- Recommandation UIT-T H.323,
- Recommandation UIT-T H.320,
- Recommandation UIT-T H.223,
- Recommandation UIT-T H.225.

10. Le procédé selon l'une quelconque des Revendications 6 à 7, où le signal de commande comprend au moins un des formats suivants :
- Recommandation UIT-T H.264, messages SEI,
- Recommandation UIT-T H.245,
- Protocole de Description de Session (SDP),
- Protocole d'Ouverture de Session (SIP).

11. Le procédé selon la Revendication 1, où la première norme de transmission vidéo et/ou la deuxième norme de transmission vidéo sont des normes de transmission vidéo différentes et sont sélectionnées parmi les normes de transmission vidéo suivantes :
- un format d'image conforme à la norme JPEG,
- un format d'image conforme à la norme PNG,
- un format d'image conforme à la norme GIF,
- une norme de transmission de données vidéo H.263 de l'UIT,
- une norme de transmission de données vidéo H.264 de l'UIT,
- une norme de transmission de données vidéo MPEG-2 de l'ISO,
- une norme de transmission de données vidéo MPEG-4 de l'ISO,
- une norme de transmission de données vidéo VC1 de la SMTPE.

12. Le procédé selon l'une quelconque des Revendications 1 à 11, comprenant l'opération suivante :
- la production en sortie du premier bloc de données décodé, du deuxième bloc de données décodé et du troisième bloc de données sur un dispositif d'affichage (VS).

13. Le procédé selon l'une quelconque des Revendications 1 à 12, où le premier bloc de données décodé correspond à une première image, le deuxième bloc de données décodé correspond à une deuxième image et le troisième bloc de données décodé correspond à une troisième image.

14. Un émetteur, comprenant :
- un premier moyen de codage (E1) avec une première mémoire tampon (P), où le premier moyen de codage (E1) est configuré de façon à coder un flux de données vidéo au moyen d'une première norme de transmission vidéo, où le premier moyen de codage (E1) code un deuxième bloc de données du flux vidéo par une prédiction à compensation de mouvement au moyen de données de référence générées au moyen d'un premier bloc de données du flux de données vidéo, et où les données de référence sont conservées en mémoire dans la première mémoire tampon (P),
- un moyen d'actualisation des données de référence conservées en mémoire dans la première mémoire tampon (P) en fonction du deuxième bloc de données de façon à générer des données de référence actualisées,
- un deuxième moyen de codage (E2) avec une deuxième mémoire tampon (P), où le deuxième moyen de codage (E2) est configuré de façon à coder le flux de données vidéo au moyen d'une deuxième norme de transmission vidéo, où le deuxième moyen de codage (E2) code un troisième bloc de données du flux de données vidéo au moyen de la deuxième norme de transmission vidéo,
- un moyen d'initialisation du deuxième moyen de codage (E2) au moyen des données de référence actualisées conservées en mémoire dans la première mémoire tampon (P), où l'initialisation du deuxième moyen de codage (E2) comprend la conservation en mémoire des données de référence actualisées dans la deuxième mémoire tampon (P), où le deuxième moyen de codage (E2) code le troisième bloc de données par une prédiction à compensation de mouvement au moyen des données de référence actualisées conservées en mémoire dans la deuxième mémoire tampon (P) et au moyen de la deuxième norme de transmission vidéo,
- un moyen de commutation du premier moyen de codage (E1) vers le deuxième moyen de codage (E2), où le moyen d'initialisation du deuxième moyen de codage (E2) est réactif au moyen de commutation de façon à initialiser le deuxième moyen de codage (E2), et
- un moyen de signalement à un dispositif de réception de la norme de transmission vidéo selon laquelle les blocs de données suivants sont codés.

15. L'émetteur selon la Revendication 14, où l'émetteur est configuré de façon à transmettre le flux de données vidéo après un établissement d'une connexion de données et à générer un flux de données de signalisation indiquant les normes de transmission vidéo disponibles dans l'émetteur.

16. Un récepteur, comprenant:
- un moyen de réception d'un flux de données vidéo formaté conformément à une première norme de transmission vidéo ou à une deuxième norme de transmission vidéo,
- un premier moyen de décodage (DR2) avec une première mémoire tampon (P), où le premier moyen de décodage (DR2) est configuré de façon à décoder un premier bloc de données à partir du flux de données vidéo au moyen de la première norme de transmission vidéo, où un deuxième bloc de données est décodé par une prédiction à compensation de mouvement au moyen de données de référence générées au moyen du premier bloc de données, et où les données de référence sont conservées en mémoire dans la première mémoire tampon (P),
- un moyen d'actualisation des données de référence conservées en mémoire dans la première mémoire tampon (P) en fonction du deuxième bloc de données de façon à générer des données de référence actualisées,
- un deuxième moyen de décodage (DR1) avec une deuxième mémoire tampon (P), où le deuxième moyen de décodage (DR1) est configuré de façon à recevoir et décoder un troisième bloc de données à partir du flux de données vidéo au moyen de la deuxième norme de transmission vidéo,
- un moyen d'initialisation du deuxième moyen de décodage (DR1) au moyen des données de référence actualisées conservées en mémoire dans la première mémoire tampon (P), où l'initialisation du deuxième moyen de décodage (DR1) comprend la conservation en mémoire des données de référence actualisées dans la deuxième mémoire tampon (P), où le deuxième moyen de décodage (DR1) décode le troisième bloc de données par une prédiction à compensation de mouvement au moyen des données de référence actualisées conservées en mémoire dans la deuxième mémoire tampon (P) et au moyen de la deuxième norme de transmission vidéo, et
- un moyen de commutation du premier moyen de décodage (DR2) vers le deuxième moyen de décodage (DR1) en réponse à un changement de norme de transmission vidéo, où le moyen d'initialisation du deuxième moyen de décodage (DR1) est réactif au moyen de commutation de façon à initialiser le deuxième moyen de décodage (DR1).

17. Le récepteur selon la Revendication 16, où la première mémoire tampon (P) du premier moyen de décodage (DR2) est couplée à la deuxième mémoire tampon (P) du deuxième moyen de décodage (DR1) par l'intermédiaire d'une mémoire temporaire (SP).

18. Le récepteur selon l'une quelconque des Revendications 16 à 17, où la première norme de transmission vidéo et/ou la deuxième norme de transmission vidéo sont des normes de transmission vidéo différentes et sont sélectionnées parmi au moins un des formats suivants :
- un format d'image conforme à la norme JPEG,
- un format d'image conforme à la norme PNG,
- un format d'image conforme à la norme GIF,
- une norme de transmission de données vidéo H.263 de l'UIT,
- une norme de transmission de données vidéo H.264 de l'UIT,
- une norme de transmission de données vidéo MPEG-2 de l'ISO,
- une norme de transmission de données vidéo MPEG-4 de l'ISO,
- une norme de transmission de données vidéo VC1 de la SMTPE.

19. Le récepteur selon l'une quelconque des Revendications 16 à 18, où le récepteur comprend en outre :
- un moyen d'actualisation des données de référence actualisées conservées en mémoire dans la deuxième mémoire tampon (P) en fonction du troisième bloc de données de façon à générer des données de référence actualisées additionnelles, où le deuxième moyen de décodage (DR1) décode un quatrième bloc de données à partir du flux de données vidéo par une prédiction à compensation de mouvement au moyen des données de référence additionnelles conservées en mémoire dans la deuxième mémoire (P) et de la deuxième norme de transmission vidéo.

20. Le récepteur selon l'une quelconque des Revendications 16 à 19, où le premier moyen de décodage (DR2) et/ou le deuxième moyen de décodage (DR1) sont formés par un processeur de traitement de données et un logiciel exécuté sur le processeur.

21. Le récepteur selon l'une quelconque des Revendications 18 à 20, où le premier moyen de décodage (DR2) et/ou le deuxième moyen de décodage (DR1) sont formés avec un circuit intégré.

22. Le récepteur selon l'une quelconque des Revendications 16 à 21, où le récepteur est configuré de façon à recevoir et à décoder un flux de données vidéo au moyen de la première norme de transmission vidéo en fonctionnement après un établissement de la connexion de données entre le récepteur et un émetteur.

23. Le récepteur selon la Revendication 22, où le récepteur est configuré de façon à extraire, d'un signal de l'émetteur, un flux de données de signalisation qui indique les normes de transmission vidéo disponibles dans l'émetteur, et à exécuter le procédé selon l'une quelconque des Revendications 1 à 14 en fonction du signal de commande qui indique une norme de transmission vidéo particulière utilisée par l'émetteur de façon à coder le flux de données vidéo.
